# EUROPÄISCHE PATENTSCHRIFT

(11) **EP 0 458 008 B1**
(45) Veröffentlichungstag und Bekanntmachung des Hinweises auf die Patenterteilung: **27.07.1994**
(21) Anmeldenummer: 91101330.8
(22) Anmeldetag: 01.02.1991
(51) Int. Cl.: B60G 15/06, B60G 13/00, F16F 13/00

(54) **Federbeinstützlager**
Strut support bearing
Palier supportant la jambe de suspension

(30) Priorität: 15.05.1990 DE 4015524
(43) Veröffentlichungstag der Anmeldung: 27.11.1991
(73) Patentinhaber: Boge GmbH, D-53783 Eitorf (DE)
(72) Erfinder: Mayerböck, Wilhelm, W-5483 Kirchdaun (DE); Krause, Wolfram, W-5357 Swisttal-Morenhoven (DE)

(56) Entgegenhaltungen:
- EP-A- 0 325 714
- EP-A- 0 386 735
- DE-A- 3 617 787
- DE-A- 3 723 135
- DE-A- 3 839 699

## Beschreibung

Die Erfindung bezieht sich auf ein Federbeinstützlager mit einem hydraulisch dämpfenden Gummilager mit mindestens einem Befestigungsteil zur Verbindung an der Fahrzeugkarosserie und einem über eine Scheibe an der Kolbenstange des Federbeins festgelegten Elastomerkörper mit zwei axial hintereinander angeordneten und Dämpfungsflüssigkeit enthaltenden Kammern, die über eine drosselnde Strömungsverbindung miteinander verbunden sind.

Es sind bereits Federbeinstützlager bekannt (z.B. DE-A 38 39 699), bei denen der Hohlraum eines Elastomerkörpers durch eine zentrisch angeordnete Scheibe in zwei axial hintereinander angeordnete Kammern unterteilt wird. Die Scheibe bildet mit der Außenwandung eine drosselnde Strömungsverbindung. Nachteilig ist bei einem derartigen Elastomerkörper, daß die Abdichtung der Kammern nach außen über ein zusätzliches Gummielement erfolgen muß.

Darüber hinaus sind Federbeinstützlager (z.B. EP-A-0.325.714) bekannt, bei denen zwei Kammern über einen Kanal miteinander verbunden sind. Das Außenteil dient dabei zur Befestigung an der Karosserie, während das Innenteil des Federbeinstützlagers mit der Kolbenstange eines Schwingungsdämpfers verbunden ist. Nachteilig ist, daß der Aufbau und die Abdichtung der beiden mit Flüssigkeit gefüllten Kammern aufwendig ist.

Aufgabe der Erfindung ist es, ein Federbeinstützlager mit einem hydraulisch dämpfenden Gummilager so auszubilden, daß eine einfache Herstellung möglich ist, wobei der Elastomerkörper durch eine entsprechende Geometrie in einem einzigen Vulkanisationsvorgang herstellbar ist.

Zur Lösung dieser Aufgabe ist erfindungsgemäß vorgesehen, daß der Elastomerkörper zur Bildung zweier axial hintereinander mindestens teilweise über den Umfang verlaufend angeordneten Kammern drei mit axialem Abstand zueinander sich radial nach außen erstreckende Bereiche aufweist, wobei der mittlere Bereich radial innen die Scheibe zur Befestigung an der Kolbenstange ummantelt, daß zwischen den radialen Enden der äußeren Bereiche und radial gegen den mittleren Bereich ein ringförmiges, die Strömungsverbindung enthaltendes Element dichtend eingesetzt ist, wobei über ein rohrförmiges Befestigungsteil der Elastomerkörper und das ringförmige Element druckdicht miteinander verspannt sind, und daß über das rohrförmige Befestigungsteil auch die weitere Fixierung zum Befestigungsteil an der Fahrzeugkarosserie erfolgt.

Vorteilhaft ist bei dieser Ausbildung, daß der Elastomerkörper in einem einzigen Vulkanisationsvorgang hergestellt wird und daß durch eine anschließende Montage des die Strömungsverbindung enthaltenden Bauteiles sowie des Befestigungsteil das Gummilager komplettiert wird. Hierbei lassen sich verschiedene Ausführungsformen von Befestigungsteilen verwenden, wie auch die die Strömungsverbindung enthaltenen Elemente unterschiedlich gestaltet werden können. Es lassen sich beispielsweise Elemente mit geometrisch einfachen Strömungsverbindungen verwenden wie auch Elemente mit ringförmig um die Lagerachse verlaufenden Strömungsverbindungen. Gleichzeitig dient das Element zur Begrenzung der Kammern zusammen mit der Zwischenwand, wobei die Zwischenwand mit dem Element kraftschlüssig und elastisch dichtend verbunden ist. Desweiteren ist von Vorteil, daß die in der Zwischenwand befindliche Scheibe problemlos mit der Kolbenstange verbunden werden und somit axiale Bewegungen ausführen kann.

Eine besonders günstige Ausführungsform sieht vor, daß der Elastomerkörper auf mindestens einer Stirnseite mit einem Metallteil armiert ist. Diese Metallteile in der Stirnseite können zur Abstützung des äußeren Befestigungsteiles herangezogen werden, indem nach Einlegen des Elementes das äußere Befestigungsteil in Form eines Rohres aufgebracht und anschließend, zum Beispiel durch Einrollen, an den Enden verschlossen wird.

Zur Erzielung einer einfachen Montage des Elementes ist vorgesehen, daß dieses Element zweiteilig ausgebildet ist.

Nach einer weiteren wesentlichen Ausführungsform ist vorgesehen, daß die Geometrie mindestens einer Kammer so ausgebildet ist, daß sie einen axialen Anschlag für die Zwischenwand bilden. Dabei kann die Kammer über den Umfang verlaufend derart von der Zwischenwand beabstandet sein, daß sie in einem entsprechenden Maß zur Zwischenwand verläuft.

Desweiteren ist vorgesehen, daß die Kammern nierenförmig über den Umfang verlaufend angeordnet sind.

In Ausgestaltung der Erfindung ist vorgesehen, daß die Flansche so ausgebildet sind, daß sie einen radialen Anschlag zur Kolbenstange bilden.

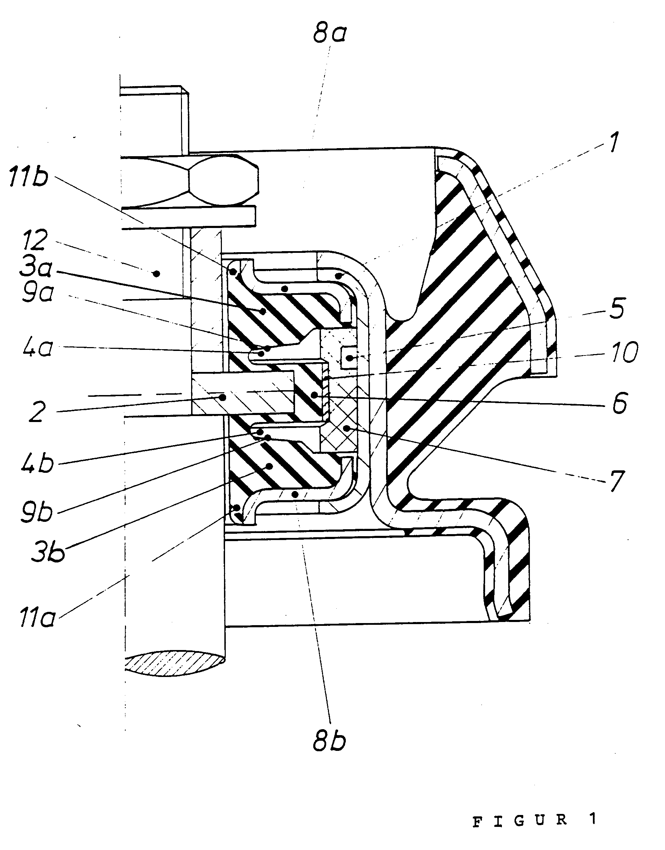

Ein bevorzugtes Ausführungsbeispiel ist in der Zeichnung schematisch dargestellt.

In der Figur ist ein hydraulisch dämpfendes Gummilager dargestellt, bei dem ein Elastomerkörper 3 einteilig ausgebildet ist, wobei in der Zwischenwand 6 eine Scheibe 2 und in den Stirnbereichen jeweils ein Metallteil einvulkanisiert ist. Die Scheibe 2 dient zur Befestigung an der Kolbenstange 12, während die Metallteile mit dem äußeren Befestigungsteil 1 durch Verschließen miteinander verbunden werden. Vor dem Schließen des äußeren Befestigungsteiles 1 ist das Element 7 einzulegen, so daß durch das Element 7 dem Elastomerkörper 3 und der Zwischenwand 6 die beiden Kammern 4a und 4b gebildet werden. Im Element 7 ist eine Strömungsverbindung 5 vorgesehen, die die Kammern 4a und 4b zur Drosselung des Dämpfungsmittels miteinander verbindet.

Als Strömungsverbindung 5 kann eine einfache geometrische Verbindung vorgesehen werden, wie auch ein ringförmig um die Lagerachse verlaufender Kanal vorgesehen werden kann.

Die Zwischenwand 6 ist über Vorspannung dichtend mit dem Element 7 verbunden, wobei zur Verschleißminderung ein Kunststoff- oder Metallring 10 angebracht werden kann.

Im axial inneren Bereich sind die Kammern mit einem geringen Abstand zur Zwischenwand 6 versehen, so daß die Zwischenwand 6 zusammen mit der Kammerwandung einen Anschlag 9a, 9b in axialer Richtung bilden.

### Bezugszeichenliste

- 1: - Befestigungsteil
- 2: - Scheibe
- 3: - Elastomerkörper
- 4a, b: - Kammer
- 5: - Strömungsverbindung
- 6: - Zwischenwand
- 7: - Element
- 8: - Metallteil
- 9: - Anschlag axial
- 10: - Kunststoff- oder Metallring
- 11a, b: - Anschlag radial
- 12: - Kolbenstange

## Patentansprüche

1. Federbeinstützlager mit einem hydraulisch dämpfenden Gummilager mit mindestens einem Befestigungsteil zur Verbindung an einer Fahrzeugkarosserie und einem über eine Scheibe an der Kolbenstange eines Federbeins festlegbaren einteilig ausgebildeten Elastomerkörper mit zwei hintereinander angeordneten und Dämpfungsflüssigkeit enthaltenden Kammern, die über eine drosselnde Strömungsverbindung miteinander verbunden sind,
dadurch gekennzeichnet,
daß der Elastomerkörper (3) zur Bildung zweier axial hintereinander mindestens teilweise über den Umfang verlaufend angeordneten Kammern drei mit axialem Abstand zueinander sich radial nach außen erstreckende Bereiche (3a; 6; 3b) aufweist, wobei der mittlere Bereich (6) radial innen die Scheibe (2) zur Befestigung an der Kolbenstange (12) ummantelt, daß zwischen den radialen Enden der äußeren Bereiche (3a; 3b) und radial gegen den mittleren Bereich (6) ein ringförmiges, die Strömungsverbindung (5) enthaltendes Element (7) dichtend eingesetzt ist, wobei über ein rohrförmiges Befestigungsteil (1) der Elastomerkörper (3) und das ringförmige Element (7) druckdicht miteinander verspannt sind, und daß über das rohrförmige Befestigungsteil (1) auch die weitere Fixierung zum Befestigungsteil an der Fahrzeugkarosserie erfolgt.

2. Lager nach Anspruch 1,
dadurch gekennzeichnet,
daß der Elastomerkörper (3) auf mindestens einer Stirnseite mit einem Metallteil (8a; 8b) armiert ist.

3. Lager nach Anspruch 1,
dadurch gekennzeichnet,
daß das Element (7) zweiteilig ausgebildet ist.

4. Lager nach Anspruch 1,
dadurch gekennzeichnet,
daß das Element (7) eine ringförmig um die Lagerachse verlaufende Strömungsverbindung (5) aufweist.

5. Lager nach Anspruch 1,
dadurch gekennzeichnet,
daß die Enden des Befestigungsteiles (1) eingerollt sind.

6. Lager nach Anspruch 1,
dadurch gekennzeichnet,
daß die Geometrie der Kammern (4a; 4b) so ausgebildet ist, daß sie einen axialen Anschlag (9a; 9b) für die Zwischenwand bilden.

7. Lager nach Anspruch 1,
dadurch gekennzeichnet,
daß die Kammern (4a; 4b) nierenförmig über den Umfang verlaufend angeordnet sind.

8. Lager nach Anspruch 1,
dadurch gekennzeichnet,
daß die Flansche (11a und 11b) so ausgebildet sind, daß sie einen radialen Anschlag zur Kolbenstange (12) bilden.

## Claims

1. Suspension strut support mounting with an hydraulically damped rubber mounting with at least one attachment member for connection to vehicle structure and an elastomeric body made in one part for attachment to the piston rod of a suspension strut through a disc, with two chambers arranged in series and containing damping fluid and connected together through a restricted flow path,
characterised in that
the elastomeric body (3) for forming two chambers arranged axially in series and at least partially extending over the periphery has three radially outwardly extending regions (3a; 6; 3b) axially spaced from one another, the central region (6) embracing the disc (2) radially inwards for attachment to the piston rod (12), that between the radial ends of the outer regions (3a; 3b) and radially opposite the central region (6) there is inserted in a sealing manner an annular element (7) containing the flow path (5), the elastomeric body (3) and the annular element (7) being clamped together in a pressure-tight manner through a tubular attachment member (1), and that the further attachment to the securing component on the vehicle structure is achieved through the tubular securing component (1).

2. Mounting according to claim 1,
characterised in that
the elastomeric body (3) is reinforced on at least one face by a metal component (8a; 8b).

3. Mounting according to claim 1,
characterised in that
the element (7) is made in two parts.

4. Mounting according to claim 1,
characterised in that
the element (7) has a ring-shaped flow path (5) extending around the axis of the mounting.

5. Mounting according to claim 1,
characterised in that
the ends of the attachment member (1) are rolled in.

6. Mounting according to claim 1,
characterised in that
the geometry of the chambers (4a; 4b) is such that they form an axial stop (9a; 9b) for the intermediate wall.

7. Mounting according to claim 1,
characterised in that
the chambers (4a; 4b) are arranged in a kidney shape extending over the periphery.

8. Mounting according to claim 1,
characterised in that
the chambers (11a and 11b) are of such a form that they form a radial stop for the piston rod (12).

## Revendications

1. Fixation d'appui pour jambe de force à ressort comprenant un appui en caoutchouc assurant un amortissement hydraulique et comprenant au moins une pièce de fixation pour la liaison à une carrosserie de véhicule et un corps en élastomère réalisé d'une seule pièce qui peut être fixé à l'aide d'un disque à la tige de piston d'une jambe de force, le corps en élastomère comprenant deux chambres agencées l'une derrière l'autre et contenant un liquide d'amortissement, les deux chambres étant reliées l'une à l'autre par l'intermédiaire d'une liaison d'écoulement à étranglement, caractérisée en ce qu'en vue de former deux chambres agencées axialement l'une derrière l'autre et s'étendant au moins partiellement sur la périphérie, le corps en élastomère (3) comprend trois régions (3a; 6; 3b) à distance axiale les unes des autres et s'étendant radialement vers l'extérieur, la région centrale (6) enveloppant radialement à l'intérieur le disque (2) pour la fixation sur la tige de piston (12), en ce qu'entre les extrémités radiales des régions extérieures (3a; 3b) et radialement contre la région centrale (6) est mis en place de façon étanche un élément (7) annulaire qui contient la liaison d'écoulement (5), le corps en élastomère (3) et l'élément annulaire (7) étant serrés de façon étanche à la pression l'un contre l'autre par l'intermédiaire d'une pièce de fixation (1) de forme tubulaire, et en ce qu'en outre la fixation sur la pièce de fixation contre la carrosserie du véhicule est assurée par la pièce de fixation tubulaire (1).

2. Fixation selon la revendication 1, caractérisée en ce que le corps en élastomère (3) est armé sur l'une au moins des faces d'extrémité avec une pièce métallique (8a; 8b).

3. Fixation selon la revendication 1, caractérisée en ce que l'élément (7) est réalisé en deux parties.

4. Fixation selon la revendication 1, caractérisée en ce que l'élément (7) comporte une liaison d'écoulement (5) qui s'étend de façon annulaire autour de l'axe de la fixation.

5. Fixation selon la revendication 1, caractérisée en ce que les extrémités de la pièce de fixation (1) sont roulées vers l'intérieur.

6. Fixation selon la revendication 1, caractérisée en ce que la géométrie des chambres (4a; 4b) est réalisée de telle manière qu'elles forment une butée axiale (9a; 9b) pour la paroi intermédiaire.

7. Fixation selon la revendication 1, caractérisée en ce que les chambres (4a; 4b) sont agencées de façon réniforme sur la périphérie.

8. Fixation selon la revendication 1, caractérisée en ce que les brides (11a et 11b) sont réalisées de telle manière qu'elles forment une butée radiale vis-à-vis de la tige de piston (12).
